# EUROPÄISCHE PATENTSCHRIFT

(11) **EP 3 052 350 B1**
(45) Veröffentlichungstag und Bekanntmachung des Hinweises auf die Patenterteilung: **08.07.2020**
(21) Anmeldenummer: 14784011.0
(22) Anmeldetag: 26.09.2014
(51) Int. Cl.: B60T 1/087, F16D 57/04

(54) **HYDRAULIKSYSTEM FÜR EINE HYDRODYNAMISCHE MASCHINE**
HYDRAULIC SYSTEM FOR A HYDRODYNAMIC MACHINE
SYSTÈME HYDRAULIQUE POUR MACHINE HYDRODYNAMIQUE

(30) Priorität: 30.09.2013 DE 102013219792
(43) Veröffentlichungstag der Anmeldung: 10.08.2016
(73) Patentinhaber: Voith Patent GmbH, 89522 Heidenheim (DE)
(72) Erfinder: SCHLOSSER, Markus, 73479 Ellwangen (DE); ROMMEL, Matthias, 73529 Schwäbisch Gmünd (DE); OTT, Helmut, 91610 Insingen (DE); LÜHRS, Thorsten, 74592 Kirchberg (DE)
(74) Vertreter: Voith Patent GmbH - Patentabteilung
(86) Internationale Anmeldenummer: PCT/EP2014/070590
(87) Internationale Veröffentlichungsnummer: WO 2015/044328

(56) Entgegenhaltungen:
- DE-A1- 2 757 237
- DE-A1- 19 909 690
- DE-A1-102006 030 791

## Beschreibung

Die Erfindung betrifft eine hydrodynamische Maschine, insbesondere einen hydrodynamischen Retarder, zur Erzeugung eines Bremsmomentes mittels eines Fluides.

Hydrodynamische Maschinen oder auch hydrodynamischer Retarder, umfassen allgemein ein Gehäuse, in dem ein erstes Schaufelrad, insbesondere Rotor, und ein hierzu konzentrisch angeordnetes zweites Schaufelrad, insbesondere Stator, die gemeinsam einen torusförmigen Arbeitsraum bilden und die um eine gemeinsame Drehachse gruppiert sind, angeordnet sind.

Retarder oder auch hydrodynamische Bremsen können in einem Antriebsstrang motorseitig bzw. getriebeseitig angeordnet sein. Der Füllungsgrad des Retarders mit einem Arbeitsfluid, zum Beispiel Öl oder auch Wasser mit und ohne Zusätze, bestimmt das "Rotor-Bremsmoment". Beim Betätigen des Retarders wird z. B. Öl in den Arbeitsraum gepumpt. Im Bremsbetrieb beschleunigt der angetriebene Rotor dieses Öl und übergibt es am Außendurchmesser des Arbeitsraums an den Stator. Dort wird das Öl verzögert und gelangt über den Innendurchmesser des Arbeitsraums zurück in den Rotor. Durch die allgemein bekannte Wechselwirkung zwischen Rotor und Stator entsteht das Bremsmoment.

Ein Hydrauliksystem sorgt dafür, dass im Nicht-Bremsbetrieb und/oder im Bremsbetrieb der Arbeitsraum mit dem entsprechenden Arbeitsmediumvolumen versorgt bzw. befüllt wird. Dabei ist es von besonderer Bedeutung, dass die in beiden Betriebsarten entstehende Wärme mittels des Arbeitsmediums aus dem Arbeitsraum abgeführt und einem Kühlkreislauf zur Kühlung in einem Kühler zugeführt wird. Insbesondere im Nicht-Bremsbetrieb ist es erforderlich, ein Mindestvolumen durch den Arbeitsraum zu leiten, um den Retarder auch im Nicht-Bremsbetrieb zu kühlen.

Der Arbeitsraum ist über die Fluidzufuhr sowie die Fluidabfuhr an einen Arbeitsfluidkreislauf angeschlossen, der sich im Wesentlichen aus einem Arbeitsfluidspeicher, einem Kühler, einer Pumpe und mehreren Ventilen zusammensetzt. Eine Steuerungs- und Regelungseinheit ist mit den Komponenten eines Hydrauliksystems derart verbunden, dass das Bremsmoment und/oder der Arbeitsmediumstrom gesteuert bzw. geregelt werden kann.

Ein derartiges Hydrauliksystem ist beispielsweise aus der DE10 2006 030 791 A1 bekannt. In diesem Hydrauliksystem geht es im Wesentlichen darum, das Arbeitsmedium in allen Betriebsweisen durch einen Kühler zu leiten, um eine optimale Temperierung zu erreichen. Wobei das Arbeitsmedium ein Öl ist, welches gleichzeitig zur Getriebeschmierung verwendet wird. Zur Anpassung des Volumenstroms ist vorgesehen, die Pumpe des Hydrauliksystems zu regeln.

Der vorliegenden Erfindung liegt die Aufgabe zugrunde, ein verbessertes Hydrauliksystem für eine hydrodynamische Maschine vorzuschlagen. Insbesondere mit dem Ziel das elektrohydraulische System hinsichtlich der Einstellbarkeit der Bremsleistung zu verbessern.

Die der Erfindung zugrunde liegende Aufgabe wird durch eine, auch die kennzeichnenden Merkmale gemäß Anspruch 1 aufweisende, gattungsgemäße hydrodynamische Maschine gelöst.

Die Erfindung beinhaltet eine hydrodynamische Maschine oder einen Retarder, insbesondere hydrodynamischen Retarder, umfassend ein erstes Schaufelrad, insbesondere Rotor, und ein hierzu konzentrisch angeordnetes zweites Schaufelrad, insbesondere Stator, die gemeinsam einen torusförmigen Arbeitsraum bilden. Des Weiteren umfasst die hydrodynamische Maschine ein elektrohydraulisches System, welches eine Steuerungs- und Regelungseinheit, eine Pumpe, einen Wärmetauscher, einen Arbeitsmediumspeicher, ein Ventil und ein Leitungssystem aufweist, wobei mittels der Pumpe ein Volumenstromumlauf des Arbeitsmediums durch das Leitungssystem und den Arbeitsraum erzeugbar ist. Das elektrohydraulische System ist dadurch gekennzeichnet, dass das Ventil ein Druckregelventil ist, mittels dem die Bremsleistung bzw. das Bremsmoment gesteuert/geregelt werden kann.

Durch die Verwendung eines Druckregelventils kann auf vorteilhafte Weise der Systemdruck proportional zum Drehmoment bzw. Bremsmoment geregelt werden. Dabei kann das Druckregelventil ein 3/3 Wegeventil oder ein 3/2 Wegeventil sein.

Weiterhin umfasst das erfindungsgemäße elektrohydraulische System zur Steuer-/Regelung des Druckregelventils eine Druckdifferenzenregelung. Im Sinne der Erfindung umfasst die Druckdifferenzregelung zumindest ein Proportionalventil und die Steuerungs- und Regelungseinheit.

Zudem kann ein Sensor zur Drehmomentenmessung mit der Steuerungs- und Regelungseinheit gekoppelt sein, sodass auch die Drehmomentmesswerte zur Druckdifferenzregelung herangezogen werden können.

Weiterhin ist die Pumpe derart in das Hydrauliksystem eingebunden, dass die Pumpe in zwei Betriebszustände geschaltet werden kann, einem ersten Betriebszustand, dem Nicht-Bremsbetrieb, und einem zweiten Betriebszustand, dem Bremsbetrieb, wobei das Leitungssystem derart ausgelegt ist, dass in beiden Betriebszuständen mittels der Pumpe ein Volumenstromumlauf durch den Arbeitsraum pumpbar ist.

Durch die Verwendung einer Pumpe in Kombination mit einem Schaltventil, zur Sicherstellung der Versorgung des Arbeitsraums mit Arbeitsmedium in allen Betriebssituationen, kann die Komplexität des Leitungssystems bzw. Hydrauliksystems reduziert werden. Damit ergeben sich reduzierte hydraulische Widerstände, wie auch Vorteile hinsichtlich Systemsicherheit, Wartung und Wirtschaftlichkeit.

Die Pumpe kann eine Gerotor-Pumpe sein, die mit dem Rotor gekoppelt bzw. drehfest verbunden ist.

Weiterhin kann in einer ersten Ausführung das Schaltventil, zur Betriebszustandsschaltung, auf der Druckseite der Pumpe angeordnet sein, wobei eine Bypassleitung, zur Umgehung des Schaltventils und der Pumpe, zurück in den Arbeitsmediumspeicher vorgesehen ist. Bei dieser Anordnung erfolgt die wesentliche Regelung des Arbeitsmediumvolumens auf der Druckseite der Pumpe, insbesondere durch das nachgeordnete Hydraulik- bzw. Leitungssystem. Nicht erforderliches Arbeitsmedium wird vor und/oder nach dem Ventil in den Arbeitsmediumspeicher zurückgeführt.

In einer zweiten Ausführung kann das Schaltventil zur Betriebszustandsschaltung auf der Saugseite der Pumpe angeordnet sein, wobei in dieser Ausführung eine Bypassleitung zur Umgehung des Ventils vorgesehen ist, durch die Arbeitsmedium von der Pumpe angesaugt werden kann.

Damit auch in dieser Ausführung Arbeitsmedium bzw. ein Teilvolumenstrom im ersten Betriebszustand, dem Nicht-Bremsbetrieb, in den Arbeitsraum gepumpt wird, ist eine zweite Bypassleitung vorgesehen. In dieser kann ein Arbeitsmediumfilter vorgesehen sein.

Weiterhin kann in dieser Ausführung das Proportionalventil, mittels dem das Druckregelventil gesteuert/geregelt wird, vorteilhaft hinter den Arbeitsmediumfilter mit der Bypassleitung gekoppelt sein. Das hat zwei Vorteile. Einmal muss nur eine geringe Menge Arbeitsmedium gefiltert werden, wodurch sich die Kosten für die Funktion "Filtern" erheblich reduzieren werden. Weiterhin wird das Proportionalventil, durch die Koppelung mit der Bypassleitung, ständig betriebsbereit gehalten, da immer ein gewisser Arbeitsmediumdruck anliegt.

Weitere Merkmale der erfindungsgemäßen Vorrichtung und weitere Vorteile der Erfindung ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert.

In diesen zeigen:
- Figur 1: einen Retarder im Schnitt
- Figur 2: ein erstes Ausführungsbeispiel für den Aufbau des Hydrauliksystems
- Figur 3: ein zweites Ausführungsbeispiel für den Aufbau des Hydrauliksystems

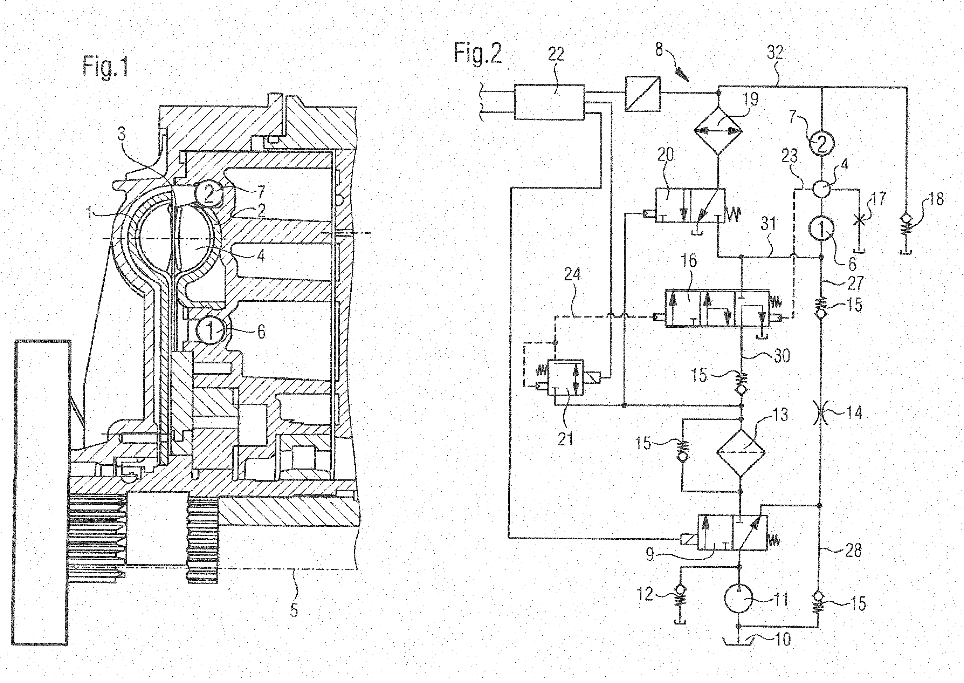

Figur 1 zeigt beispielhaft einen Retarder im Schnitt, welcher insbesondere in Bussen und Nutzfahrzeugen zum Einsatz kommt.

Der Retarder umfasst ein Gehäuse, bestehend aus mehreren Gehäuseteilen, einen Rotor 1 und einen Stator 2, welche miteinander einen torusförmigen Ringraum bzw. Arbeitsraum 4 bilden.

Der Retarder wird mit einem Arbeitsfluid, insbesondere einem Öl betrieben, welches mittels der Pumpe 11 über ein Leitungssystem in den Einlasskanal 6, bzw. Spiralkanal gepumpt wird. Vom Einlasskanal 6 gelangt das Öl durch den Trennspalt 3 in den Arbeitsraum 4. Im Arbeitsraum 4 bildet sich während des Bremsbetriebs eine Kreislaufströmung. Der angetriebene Rotor 1 beschleunigt das Öl und übergibt es am Außendurchmesser in den Stator 2. Dort trifft das Öl auf die ruhenden Statorschaufeln und wird verzögert. Das Öl fließt auf dem Innendurchmesser erneut dem Rotor 2 zu. Die entstehende Bremsenergie wird überwiegend in Wärme umgesetzt, sodass es erforderlich ist, ein Teil des Öl's permanent mittels einem Wärmetauscher 19 zu kühlen. Dieser Anteil des Öls wird über den Fluidauslass bzw. den Auslasskanal 7 aus der Kreislaufströmung abgeleitet. Das abgeleitete Öl wird nachfolgend durch einen Wärmetauscher 19 und anschließend, je nach Betriebszustand, zurück in den Arbeitsraum 4 gepumpt, sodass eine Kreislaufströmung entsteht. Im Nicht-Bremsbetrieb wird das Öl zurück in den Arbeitsmediumspeicher 10 gepumpt.

Figur 2 zeigt ein erstes Ausführungsbeispiel für den Aufbau des Hydrauliksystems. Eines der wesentlichen Merkmale dieser Ausführung ist die Anordnung der Pumpe 11 vor dem Ventil 9. Das Ventil ist hier in der Nicht-Bremsbetrieb-Stellung dargestellt. Sobald die Pumpe angetrieben wird, wird Öl aus dem Arbeitsmediumspeicher über das Ventil in die Bypassleitungen 27, 28 gepumpt. In der Bypassleitung 27 ist eine Drossel 14 eingebaut, die derart eingestellt werden kann, dass ein kleiner Teil des Arbeitsmediums in den Arbeitsraum 4 gepumpt wird. Der Volumenstrom ist so groß zu wählen, dass eine ausreichende Wärmeabfuhr aus dem Arbeitsraum gewährleistet ist. Weiterhin darf er nicht so groß sein, dass ein erhöhter Leerlaufwiderstand erzeugt wird. Aus dem Arbeitsraum 4 wird das Öl durch den Wärmetauscher 19 zurück in den Arbeitsmediumspeicher 10 gepumpt. Somit wird im Nicht-Bremsbetrieb ständig eine kleine Menge Öl mittels des Wärmetauschers 19 gekühlt.

Die zweite Bypassleitung 28 leitet den restlichen, wesentlich größeren, Volumenstrom direkt zurück in den Arbeitsmediumspeicher 10. Die Pumpe 11 läuft somit nahezu im Leerlaufbetrieb, wodurch die Verluste im Nicht-Bremsbetrieb minimiert werden können, ohne die Pumpe regeln zu müssen. Als Pumpe kann hier eine Gerotor-Pumpe eingesetzt werden, die direkt von der Rotorwelle angetrieben wird.

Für den Bremsbetrieb, Stellung nicht dargestellt, werden die Ventile 9, 16 und 20 geschaltet. Sobald das auf der Druckseite der Pumpe 11 angeordnete Schaltventil 9 schaltet, gelangt Arbeitsmedium über die Arbeitsleitungen 30, 31 und Ventil 16 in den Arbeitsraum 4.

Ventil 16 ist eine Druckwaage, die über den im Arbeitsraum 4 gemessenen Druck und dem von dem Proportionalventil 21 vorgegebenen Druck, in die entsprechende Schaltposition geschaltet wird. Eine Druckwaage ist ein Differenzdruckventil oder Druckregelventil, das einen Differenzdruck zwischen einer extern zugeführten Messstelle und einem am Ventil anliegenden Druck regeln kann. Ventil 16 kann als 3/3 Wegeventil wie hier dargestellt oder aber auch als 2/3 Wegeventil ausgeführt sein. Mittels der Druckwaage kann der Systemdruck im Arbeitsraum 4 proportional zum gewünschten Bremsmoment an der Rotorwelle geregelt werden. Dazu kann ein Drehmomentsensor z. B. an der Rotorwelle vorgesehen sein. Das Proportionalventil 21 wird bei dieser Schaltung erst dann mit Systemdruck versorgt, wenn in Bremsstellung geschaltet wird. Zum Schutz des Proportionalventils 21 ist ein Filter 13 vorgesehen, der das gesamte für den Bremsbetrieb notwendige Arbeitsmedium filtert.

Durch die Schaltung des Ventils 20 wird ein geschlossener Kreislauf zwischen Arbeitsraum 4 und Kühler 19 gebildet, wobei der Systemdruck über die Regelung der Druckwaage geregelt wird.

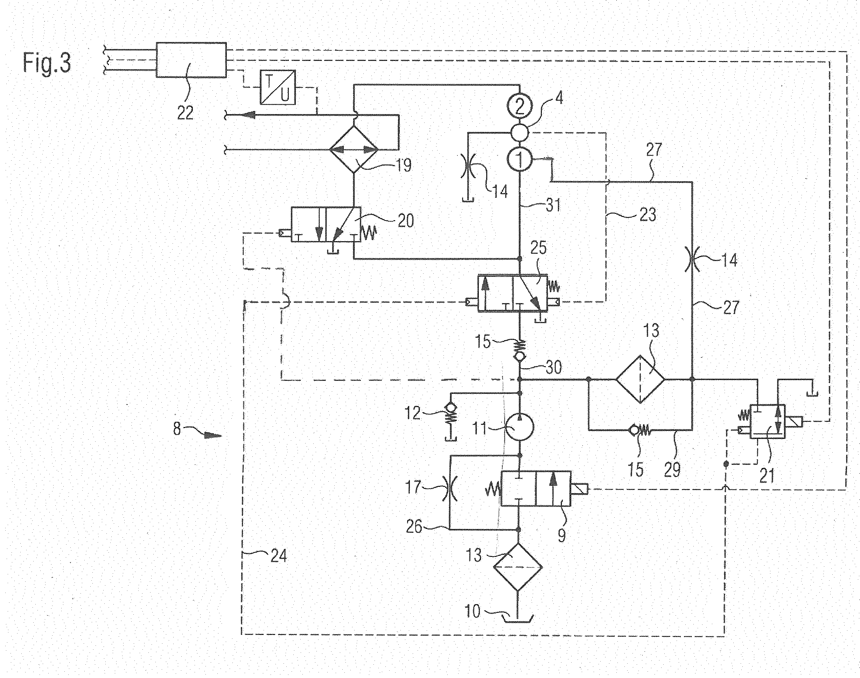

Figur 3 zeigt ein zweites Ausführungsbeispiel für den Aufbau des Hydrauliksystems. Dieses unterscheidet sich wesentlich von der ersten Ausführung, wobei auch in dieser Ausführung im Nicht-Bremsbetrieb ein gewisses Volumen Arbeitsmedium mittels der Pumpe 11 in den Arbeitsraum 4 gepumpt wird. Bei diesem Aufbau ist das Ventil 9 auf der Saugseite der Pumpe 11 angeordnet.

Im Nicht-Bremsbetrieb wird ständig Arbeitsmedium von der Pumpe 11 über die, mittels einer Saugdrossel 17 gedrosselte, Bypassleitung 26 aus dem Arbeitsmediumspeicher 10 angesaugt und über den Bypass 27 in den Arbeitsraum 4 gepumpt. Dabei endet die Bypassleitung 27 derart im Einlasskanal 6, dass das Arbeitsmedium im Wesentlichen durch den Arbeitsraum 4 in den Auslasskanal 7 gepumpt wird.

Im Bypass 27 ist nochmals eine Drossel 14 installiert und vor dieser ist ein Proportionalventil 21 zur Regelung der Druckwaage, mit dem Ventil 25, an die Bypassleitung 27 angeschlossen. So wird sichergestellt, dass immer ein ausreichender Systemdruck am Proportionalventil 21 anliegt und so eine schnelle, verzögerungsfreie Regelung der Bremswirkung ermöglicht wird. Weiterhin ist ein Filter 13, insbesondere Feinfilter, in der Bypassleitung 27 vor dem Proportionalventil 21 installiert, dadurch wird nur das für den Nicht-Bremsbetrieb und für die Ansteuerung des Proportionalventils 21 notwendige relativ kleine Volumen gefiltert.

Für den Bremsbetrieb, Stellung nicht dargestellt, werden die Ventile 9, 20 und 25 geschaltet. Das Öl gelangt über die Arbeitsleitungen 30, 31 und Ventil 25 in den Arbeitsraum 4. Ventil 25 ist eine Druckwaage, die entsprechend dem im Arbeitsraum 4 gemessenen Druck und dem von dem Proportionalventil 21 vorgegebenen Druck in die entsprechende Schaltposition geschaltet wird. Ventil 25 kann als 2/3 Wegeventil wie hier dargestellt oder aber auch als 3/3 Wegeventil ausgeführt sein. Mittels der Druckwaage kann der Systemdruck im Arbeitsraum 4 proportional zum gewünschten Bremsmoment an der Rotorwelle geregelt werden. Dazu kann ein Drehmomentsensor z. B. an der Rotorwelle vorgesehen sein.

Als Pumpe ist eine Gerotor-Pumpe 11 vorgesehen, die mit der Rotorwelle drehfest verbunden ist. In beiden Ausführungsbeispielen ist gewährleistet, dass der Pumpenwiderstand im Nicht-Bremsbetrieb sehr gering ist und im Bremsbetrieb bremsunterstützend wirkt.

Allgemein sei noch erwähnt, dass die in den Figuren gezeigten Filter und Rückflussleitungen in den Arbeitsmediumspeicher 10 und die in den Leitungen installierten Drosseln bzw. Rückschlagventile für die Gesamtfunktion zwar notwendig sind, aber vom Fachmann routinemäßig eingesetzt werden.

### Bezugszeichenliste

- 1: Rotor
- 2: Stator
- 3: Trennspalt
- 4: Arbeitsraum
- 5: Drehachse
- 6: Einlasskanal
- 7: Auslasskanal
- 8: elektrohydraulisches System
- 9: Ventil
- 10: Arbeitsmediumspeicher
- 11: Pumpe
- 12: Überdruckventil
- 13a/b: Ölsieb / Filter
- 14: Drossel
- 15: Rückschlagventil
- 16: Druckdifferenzventil 3/3 Wegeventil
- 17: Saugdrossel
- 18: Überdruckventil
- 19: Wärmetauscher
- 20: Schaltventil
- 21: Proportionalventl
- 22: Steuerungs- und Regeleinheit
- 23: Steuerleitung
- 24: Steuerleitung
- 25: Druckdifferenzventil
- 26 - 29: Bassleitung
- 30 - 31: Arbeitsleitung
- 32: Leitung zum Kühler

## Patentansprüche

1. Hydrodynamische Maschine zur Erzeugung eines Bremsmomentes, insbesondere hydrodynamischer Retarder, umfassend ein erstes Schaufelrad, insbesondere Rotor (1), und ein hierzu konzentrisch angeordnetes zweites Schaufelrad, insbesondere Stator (2), die gemeinsam einen torusförmigen Arbeitsraum (4) bilden, mit einem Hydrauliksystem, welches eine Steuerungs- und Regelungseinheit (22), eine Pumpe (11), einen Wärmetauscher, ein Ventil (16, 25), ein Arbeitsmediumspeicher (10), und ein Leitungssystem aufweist, wobei mittels der Pumpe (11) ein Volumenstromumlauf des Arbeitsmediums durch das Leitungssystem und den Arbeitsraum erzeugbbar ist,
wobei das Ventil (16, 25) ein Druckregelventil ist, mittels dem die Bremsleistung bzw. das Bremsmoment gesteuert/geregelt werden kann, **dadurch gekennzeichnet, dass** das Druckregelventil (16, 25) über eine Druckdifferenzregelung (21, 22, 23) gesteuert/geregelt wird.

2. Hydrodynamische Maschine nach Anspruch 1, **dadurch gekennzeichnet,**
**dass** das Druckregelventil ein 3/3 Wegeventil (16) oder ein 3/2 Wegeventil (25) ist.

3. Hydrodynamische Maschine nach Anspruch 1,
**dadurch gekennzeichnet,**
**dass** ein Sensor zur Drehmomentenmessung mit der Steuerungs- und Regelungseinheit (22) gekoppelt ist und die Drehmomentmesswerte zur Druckdifferenzregelung herangezogen werden.

4. Hydrodynamische Maschine nach einem der Ansprüche 1 bis 3,
**dadurch gekennzeichnet,**
**dass** die Pumpe (11) derart in das Hydrauliksystem eingebunden ist, dass die Pumpe (11) in zwei Betriebszustände geschaltet werden kann, einem ersten Betriebszustand, dem Nicht-Bremsbetrieb, und einem zweiten Betriebszustand, dem Bremsbetrieb, wobei das Leitungssystem derart ausgelegt ist, dass in beiden Betriebszuständen mittels der Pumpe (11) ein Volumenstromumlauf durch den Arbeitsraum (4) pumpbar ist.

5. Hydrodynamische Maschine nach Anspruch 1,
**dadurch gekennzeichnet,**
**dass** die Pumpe (11) eine Gerotor-Pumpe ist, die mit dem Rotor (1) gekoppelt ist.

6. Hydrodynamische Maschine nach einem der Ansprüche 1 bis 5, da
durch gekennzeichnet,
dass ein Ventil (9) zur Betriebszustandsschaltung auf der Druckseite der Pumpe (11) angeordnet ist und eine Bypassleitung (28), zur Umgehung des Ventils und der Pumpe (11) zurück in den Arbeitsmediumspeicher (10) vorgesehen ist.

7. Hydrodynamische Maschine nach einem der Ansprüche 1 bis 5, da
durch gekennzeichnet,
dass ein Ventil (9) zur Betriebszustandsschaltung auf der Saugseite der Pumpe (11) angeordnet ist und eine Bypassleitung (26), zur Umgehung des Ventils (9) vorgesehen ist.

8. Hydrodynamische Maschine nach Anspruch 7,
**dadurch gekennzeichnet,**
**dass** eine zweite Bypassleitung (27) vorgesehen ist, durch die im ersten Betriebszustand, Nicht-Bremsbetrieb, ein Teilvolumenstrom in den Arbeitsraum (4) gepumpt werden kann.

9. Hydrodynamische Maschine nach Anspruch 8,
**dadurch gekennzeichnet,**
**dass** in der zweiten Bypassleitung (27) ein Arbeitsmediumfilter (13) vorgesehen ist.

10. Hydrodynamische Maschine nach Anspruch 9,
**dadurch gekennzeichnet,**
**dass** das Druckregelventil (25) mittels eines Proportionalventils (21) gesteuert/geregelt wird, welches hinter den Arbeitsmediumfilter (13) mit der Bypassleitung (27) gekoppelt ist.

## Claims

1. Hydrodynamic machine for producing a braking torque, in particular a hydrodynamic retarder, comprising a first blade wheel, in particular a rotor (1), and a second blade wheel, in particular a stator (2), arranged concentrically thereto, which wheels together form a toroidal working space (4), with a hydraulic system which has an open-loop and closed-loop control unit (22), a pump (11), a heat exchanger, a valve (16, 25), a working medium reservoir (10), and a line system, wherein a volumetric flow circulation of the working medium through the line system and the working space can be produced by means of the pump (11), wherein the valve (16, 25) is a pressure-regulated valve by means of which of the braking power or the braking torque can be controlled under open-loop/closed-loop control,
**characterized**
**in that** the pressure-regulated valve (16, 25) is controlled under open-loop/closed-loop control by way of a pressure differential control (21, 22, 23).

2. Hydrodynamic machine according to Claim 1,
**characterized**
**in that** the pressure-regulated valve is a 3/3-way valve (16) or a 3/2-way valve (25).

3. Hydrodynamic machine according to Claim 1,
**characterized**
**in that** a sensor for torque measurement is coupled to the open-loop and closed-loop control unit (22), and the torque measurement values are used for pressure differential control.

4. Hydrodynamic machine according to one of Claims 1 to 3,
**characterized**
**in that** the pump (11) is integrated in the hydraulic system in such a way that the pump (11) can be switched into two operating states, a first operating state, the non-braking mode, and a second operating state, the braking mode, wherein the line system is designed in such a way that a volumetric flow circulation can be pumped through the working space (4) in both operating states by means of the pump (11).

5. Hydrodynamic machine according to Claim 1,
**characterized**
**in that** the pump (11) is a gerotor pump which is coupled to the rotor (1).

6. Hydrodynamic machine according to one of Claims 1 to 5,
**characterized**
**in that** a valve (9) for operating state switching is arranged on the pressure side of the pump (11), and a bypass line (28), for bypassing the valve and the pump (11), is provided back into the working medium reservoir (10) .

7. Hydrodynamic machine according to one of Claims 1 to 5,
**characterized**
**in that** a valve (9) for operating state switching is arranged on the suction side of the pump (11), and a bypass line (26), for bypassing the valve (9), is provided.

8. Hydrodynamic machine according to Claim 7,
**characterized**
**in that** a second bypass line (27) is provided through which a partial volumetric flow can be pumped into the working space (4) in the first operating state, the non-braking mode.

9. Hydrodynamic machine according to Claim 8,
**characterized**
**in that** a working medium filter (13) is provided in the second bypass line (27).

10. Hydrodynamic machine according to Claim 9,
**characterized**
**in that** the pressure-regulated valve (25) is controlled under open-loop/closed-loop control by means of a proportional valve (21) which is coupled downstream of the working medium filter (13) to the bypass line (27).

## Revendications

1. Machine hydrodynamique pour générer un couple de freinage, en particulier ralentisseur hydrodynamique, comprenant une première roue à aubes, en particulier un rotor (1), et une deuxième roue à aubes disposée concentriquement par rapport à celle-ci, en particulier un stator (2), qui forment ensemble un espace de travail en forme de tore (4), avec un système hydraulique qui présente une unité de commande et de régulation (22), une pompe (11), un échangeur de chaleur, une soupape (16, 25), un accumulateur de fluide de travail (10) et un système de conduites, une circulation de débit volumique du fluide de travail pouvant être générée au moyen de la pompe (11) à travers le système de conduites et l'espace de travail, la soupape (16, 25) étant une soupape de régulation de pression au moyen de laquelle la puissance de freinage ou le couple de freinage peuvent être commandés/régulés,
**caractérisée en ce que**
la soupape de régulation de pression (16, 25) est commandée/régulée par le biais d'une régulation de différence de pression (21, 22, 23).

2. Machine hydrodynamique selon la revendication 1,
**caractérisée en ce que**
la soupape de régulation de pression est une soupape à 3/3 voies (16) ou une soupape à 3/2 voies (25).

3. Machine hydrodynamique selon la revendication 1,
**caractérisée en ce**
**qu'**un capteur pour la mesure de couple est accouplé à l'unité de commande et de régulation (22) et les valeurs de mesure de couple sont utilisées pour la régulation de la différence de pression.

4. Machine hydrodynamique selon l'une quelconque des revendications 1 à 3,
**caractérisée en ce que**
la pompe (11) est incorporée dans le système hydraulique de telle sorte que la pompe (11) puisse être commutée dans deux états de fonctionnement, un premier état de fonctionnement, le mode sans freinage, et un deuxième état de fonctionnement, le mode de freinage, le système de conduites étant conçu de telle sorte que dans les deux états de fonctionnement, une circulation de débit volumique puisse être pompée au moyen de la pompe (11) à travers l'espace de travail (4) .

5. Machine hydrodynamique selon la revendication 1,
**caractérisée en ce que**
la pompe (11) est une pompe gérotor, qui est accouplée au rotor (1).

6. Machine hydrodynamique selon l'une quelconque des revendications 1 à 5,
**caractérisée en ce**
**qu'**une soupape (9) pour commuter l'état de fonctionnement est disposée sur le côté pression de la pompe (11) et une conduite de dérivation (28) est prévue pour contourner la soupape et la pompe (11) et revenir à l'accumulateur de fluide de travail (10).

7. Machine hydrodynamique selon l'une quelconque des revendications 1 à 5,
**caractérisée en ce**
**qu'**une soupape (9) pour commuter l'état de fonctionnement est disposée sur le côté aspiration de la pompe (11) et une conduite de dérivation (26) est prévue pour contourner la soupape (9).

8. Machine hydrodynamique selon la revendication 7,
**caractérisée en ce**
**qu'**une deuxième conduite de dérivation (27) est prévue, par laquelle, dans le premier état de fonctionnement, le mode sans freinage, un débit volumique partiel peut être pompé dans l'espace de travail (4).

9. Machine hydrodynamique selon la revendication 8,
**caractérisée en ce que**
dans la deuxième conduite de dérivation (27) est prévu un filtre de fluide de travail (13).

10. Machine hydrodynamique selon la revendication 9,
**caractérisée en ce que**
la soupape de régulation de pression (25) est commandée/régulée au moyen d'une soupape proportionnelle (21) qui est accouplée derrière le filtre de fluide de travail (13) à la conduite de dérivation (27).
